# EUROPÄISCHE PATENTSCHRIFT

(11) **EP 1 383 848 B1**
(45) Veröffentlichungstag und Bekanntmachung des Hinweises auf die Patenterteilung: **13.06.2012**
(21) Anmeldenummer: 02726071.0
(22) Anmeldetag: 22.03.2002
(51) Int. Cl.: C09K 11/02, G21K 4/00

(54) **STRAHLUNGSWANDLER UND VERFAHREN ZUR HERSTELLUNG DESSELBEN**
RADIATION CONVERTER AND METHOD FOR THE PRODUCTION THEREOF
CONVERTISSEUR DE RAYONNEMENT ET PROCEDE DE FABRICATION ASSOCIE

(30) Priorität: 04.04.2001 DE 10116803
(43) Veröffentlichungstag der Anmeldung: 28.01.2004
(73) Patentinhaber: SIEMENS AKTIENGESELLSCHAFT, 80333 München (DE)
(72) Erfinder: FUCHS, Manfred, 90459 Nürnberg (DE); HACKENSCHMIED, Peter, 90425 Nürnberg (DE); HELL, Erich, 89537 Gingen (DE); MATTERN, Detlef, 91056 Erlangen (DE)
(86) Internationale Anmeldenummer: PCT/DE2002/001056
(87) Internationale Veröffentlichungsnummer: WO 2002/081591

(56) Entgegenhaltungen:
- EP-A- 1 113 458
- EP-A- 1 158 540
- US-A- 4 803 366

## Beschreibung

Die Erfindung betrifft einen Strahlungswandler nach dem Oberbegriff des Anspruchs 1. Sie betrifft ferner ein Verfahren zur Herstellung eines solchen Strahlungswandlers nach dem Oberbegriff des Anspruchs 7.

Strahlungswandler finden in der bildgebenden medizinischen Diagnostik Anwendung. Sie werden bei Röntgenbildverstärkern, Röntgendetektoren und Röntgenfilmaufnahmen als Verstärkerfolien, bei Speicherleuchtstoffbildsystemen und bei Kameras eingesetzt. Bei solchen Strahlungswandlern wird hochenergetische Strahlung in einer Szintillator- bzw. Leuchtstoffschicht absorbiert und in Licht gewandelt oder als Elektronen/Loch-Paar gespeichert. Das im Leuchtstoff durch die Absorption hochenergetischer Quanten gebildete Lumineszenzlicht breitet sich in einem gewissen Ausmaß auch seitlich aus, wobei dieser Effekt mit der Schichtdicke der Leuchtstoffschicht zunimmt. Die seitliche Lichtausbreitung bewirkt eine Verschlechterung der Modulationstransferfunktion MTF des bildgebenden Systems bzw. begrenzt das Auflösungsvermögen. Deshalb ist eine Kanalisierung des Lichts, d.h. eine weitgehende Verhinderung der seitlichen Lichtausbreitung, anzustreben. Bei Speicherleuchtstoffsystemen wirkt sich dieser Effekt besonders stark aus, weil das Stimulationslicht zum Auslösen der Elektronen/Loch-Paare und das gebildete Emissionslicht auf derselben Achse eingestrahlt bzw. beobachtet werden. Es wird dazu auf die EP 1 065 527 A2 verwiesen.

Ein gattungsgemäßer Strahlungswandler ist z.B. aus der EP 0 215 699 A1 oder der DE 44 33 132 A1 bekannt. Dabei ist auf einem z.B. aus Aluminium hergestellten Substrat eine aus nadelförmigen Kristallen gebildete Leuchtstoffschicht aufgebracht. Die Leuchtstoffschicht ist aus einem dotierten Alkalihalogenid hergestellt. Zur Verbesserung der Lichtleiteigenschaften ist es bekannt, in die Zwischenräume zwischen den nadelförmigen Kristallen einen Farbstoff einzubringen.

Nachteiligerweise haben sich die in der Praxis benutzten Farbstoffe nicht als besonders stabil gegenüber Röntgenstrahlung erwiesen. Die Farbstoffe werden gelöst in einem Lösungsmittel auf die Leuchtstoffschicht aufgebracht. Das Lösungsmittel löst unerwünschterweise den Leuchtstoff an. In einem nach dem Aufbringen des Farbstoffs erfolgenden weiteren Verfahrensschritt muss die auf der Oberfläche der Leuchtstoffschicht aufgebrachte Farbstoffschicht wieder entfernt werden. Die Herstellung des bekannten Strahlungswandlers ist aufwendig.

Aufgabe der Erfindung ist es, die Nachteile nach dem Stand der Technik zu beseitigen. Es soll insbesondere ein Strahlungswandler mit guten Lichtleiteigenschaften angegeben werden, der möglichst einfach und kostengünstig herstellbar ist.

Diese Aufgabe wird durch die Merkmale der Ansprüche 1 und 6 gelöst. Zweckmäßige Ausgestaltungen ergeben sich aus den Merkmalen der Ansprüche 2 bis 5 und 7 bis 17.

Nach Maßgabe der Erfindung ist vorgesehen, dass in den Kristallen ein Farbstoff aufgenommen ist, wobei der Farbstoff ein Halogenid ist. - Überraschenderweise weist ein solcher Strahlungswandler hervorragende Lichtleiteigenschaften auf. Eine unerwünschte laterale Ausbreitung des Szintillatorlichts wird nahezu vollständig unterdrückt. Es ist weiter überraschend, dass der Einbau von Farbstoffen in das Kristallgitter die Szintillationseigenschaften nicht negativ beeinflusst. Der erfindungsgemäße Strahlungswandler kann einfach hergestellt werden, indem z.B. ein geeigneter Farbstoff gleichzeitig mit dem Leuchtstoff verdampft wird. Nach einer vorteilhaften Ausgestaltung ist der Farbstoff im Bereich der Kristallgrenzen angereichert. Damit kann eine besonders hohe Auskopplung an Lumineszenzlicht erreicht werden.

Bei dem Farbstoff handelt es sich um ein Halogenid. Der Farbstoff kann zweckmäßigerweise eines der folgenden Metalle enthalten: Ti, Co, Zr, V, Mn, Fe, Mo, Ta, Nb, Pd, In, Sn, Pt, W. Das Halogenid ist vorteilhafterweise aus der folgenden Gruppe ausgewählt: TiBr₃, CoCl₂, ZrBr₃, ZrI₂, TiI₄, VCL₄, InI, PdBr₂, PtCl₄, MoCl₄, TaI₅, WCl₄, WBr₅, MoBr₃, TaBr₅, TaCl₅, WI₄, TiI₄, PdCl₂, FeCl₃, MnI₂, MoCl₃, NbBr₅, MoBr₂, SnI₄, MnCl₂, MnBr₂. Nach einem weiteren Ausgestaltungsmerkmal kann der Leuchtstoff ein aus der folgenden Gruppe ausgewähltes Alkalihalogenid sein: RbCl, RbI, RbBr, CsCp, CsI, CsBr. Das Substrat kann aus Glas, Aluminium oder Edelstahl hergestellt sein. Die vorbenannten Materialverbindungen haben sich als besonders geeignet zur Herstellung eines Strahlungswandlers nach der vorliegenden Erfindung erwiesen.

Nach der verfahrensseitigen Maßgabe der Erfindung ist vorgesehen, dass während des Verdampfens des Leuchtstoffs ein Farbstoff und/oder ein mit einem Metall zu einem Farbstoff reagierender Stoff verdampft wird/werden, wobei der Farbstoff ein Halogenid ist. - Das Verfahren ist einfach und kostengünstig durchführbar.

Wegen der vorteilhaften Ausgestaltungen des Verfahrens wird auf die obigen Ausführungen verwiesen, welche entsprechend auf das Verfahren anwendbar sind.

Nach einer Verfahrensvariante wird ein aus dem Leuchtstoff und dem Farbstoff hergestelltes Gemisch aus einer gemeinsamen Verdampfungsquelle verdampft. In diesem Fall ist das Gefäß zur Aufnahme des Gemischs zweckmäßigerweise aus einem inerten Material hergestellt.

Nach einer weiteren Variante des Verfahrens wird ein aus dem Leuchtstoff, dem Metall und dem Stoff hergestelltes weiteres Gemisch verdampft. Zweckmäßigerweise ist der Stoff aus der folgenden Gruppe ausgewählt: NaCl, NaI, NaBr, SmBr₂, EuBr₂, TlI, GaBr₃, EuCl₂. Das Metall kann aus der folgenden Gruppe ausgewählt sein: Ti, Co, Zr, V, Mn, Fe, Mo, Ta, Nb, Pd, In, Sn, Pt, W. Es kommt dabei in der Schmelze des Leuchtstoffs zu einer Reaktion zwischen dem Metall und dem Stoff, bei welcher der Farbstoff gebildet wird. Das Metall kann in Form eines Pulvers dem Gemisch beigegeben werden. Es ist aber auch möglich, ein aus dem Metall hergestelltes Gefäß zu benutzen, in dem der mit dem Stoff versetzte Leuchtstoff beim Verdampfen aufgenommen ist. Des weiteren ist es auch möglich, einen den Leuchtstoff und den Stoff enthaltenden Dampf über eine aus dem Metall hergestellte Oberfläche zu leiten und anschließend auf dem Substrat abzuscheiden.

Nach einer weiteren Verfahrensvariante ist es auch möglich, den Farbstoff und den Leuchtstoff aus separaten Verdampfungsquellen zu verdampfen. Das ermöglicht eine besonders genaue Einstellung des Farbstoffgehalts in den Kristallen. Ferner ist es möglich, vor dem Abscheiden von Leuchtstoff, eine Farbstoffschicht auf dem Substrat herzustellen. Die den Farbstoff enthaltende Verdampfungsquelle kann ferner vor der den Leuchtstoff enthaltenden Verdampfungsquelle geschlossen werden. Eine solche Verfahrensführung erlaubt es, dass die lichtauskopplungsseitigen Oberflächen der Kristalle kaum Farbstoff enthalten. Eine besonders hohe Ausbeute an Lumineszenzlicht kann erreicht werden. Die Modulationstransferfunktion MTF ist in diesem Fall deutlich verbessert.

Als besonders vorteilhaft hat es sich erwiesen, die Leuchtstoffschicht bei einer Temperatur im Bereich von 100 bis 300°C zu tempern. Das Tempern bewirkt eine Wanderung der Farbstoffe zu den Kristallgrenzen. Infolge dessen reichern sich die Farbstoffe an den Kristallgrenzen an. Eine laterale Lichtausbreitung wird besonders effektiv unterdrückt. Die Auskopplung des Lumineszenzlichts in Richtung der c-Achse der nadelförmigen Kristalle wird drastisch verbessert. Des weiteren hat sich gezeigt, dass das Tempern einer Rekristallation der Leuchtstoffschicht entgegenwirkt.

Nachfolgend werden Ausführungsbeispiele der Erfindung anhand der Zeichnung näher erläutert. Es zeigen:
- Fig. 1: eine schematische Querschnittsansicht eines Strahlungswandlers,
- Fig. 2: eine schematische Querschnittsansicht einer Aufdampfanlage,
- Fig. 3: eine erste Röntgenfluoreszenzanalyse und
- Fig. 4: eine zweite Röntgenfluoreszenzanalyse.

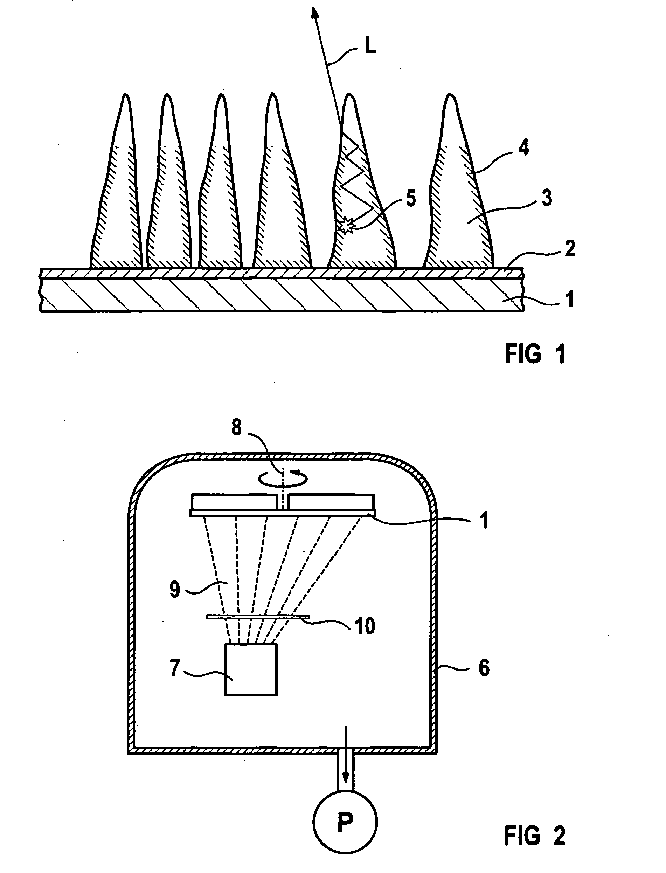

In Fig. 1 ist schematisch im Querschnitt ein Strahlungswandler gezeigt, bei dem auf einem aus Aluminium hergestellten Substrat 1 eine Farbstoffschicht 2 aufgebracht ist. Auf der Farbstoffschicht 2 abgeschieden sind nadelförmige Kristalle, deren c-Achse im wesentlichen senkrecht von der Oberfläche des Substrats 1 sich erstreckt. Die Kristalle 3 weisen im Bereich ihrer Kristallgrenzen eine Anreicherung von Farbstoffen 4 auf. Lediglich im Bereich der Spitzen der Nadeln ist eine solche Anreicherung von Farbstoffen 4 nicht vorgesehen.

Die Funktion der Anreicherung der Farbstoffe 4 an den Kristallgrenzen ist folgende: Bei Anregung eines mit 5 bezeichneten Leuchtstoffzentrums mit elektromagnetischer Strahlung geeigneter Wellenlänge bildet sich Lumineszenzlicht L. Dieses wird, so weit es sich lateral im Kristall ausbreitet, an der mit Farbstoff 4 angereicherten Korngrenze reflektiert. Der Strahlengang des reflektierten Lichts ist mit bezeichnet. Das reflektierte Lumineszenzlicht wird im wesentlichen senkrecht zur Substratoberfläche aus der Leuchtstoffschicht ausgekoppelt.

In Fig. 2 ist schematisch im Querschnitt eine Aufdampfanlage zur Durchführung des erfindungsgemäßen Verfahrens gezeigt. In einem Vakuumgefäß 6 befindet sich eine Aufdampfquelle 7, die dem, vorzugsweise um eine Achse 8 rotierenden Substrat 1, gegenüberliegend angeordnet ist. Die Aufdampfquelle 7 erzeugt einen Aufdampfstrahl 9, der auf das Substrat 1 gerichtet ist.

Die Aufdampfquelle 7 kann z.B. ein Verdampferschiffchen aus Molybdän enthalten, in das CsBr-Pulver mit 5% EuBr₂-Dotierung gefüllt ist. Darüber angebracht ist ein aus z.B. Tantal hergestelltes Gitter oder Blech 10. Der aus dem Verdampferschiffchen entweichende Dampf wird durch das Tantal-Gitter 10 geleitet oder am Tantal-Blech entlang geführt. Dabei nimmt der Dampf Metall auf. Die auf dem Substrat 1 abgeschiedenen Kristalle enthalten TaBr₅ und MoBr₃. Die Kristalle sind grün gefärbt. Die Verdampfung des aus CsB:EuBr₂ hergestellten Leuchtstoffs erfolgt zweckmäßigerweise bei einer Temperatur von 630 bis 720°C. Das aus den Tantal hergestellte Gitter 10 wird auf die jeweils gewählte Verdampfungstemperatur erhitzt.

Weitere Ausführungsbeispiele zur Durchführung des Verfahrens:

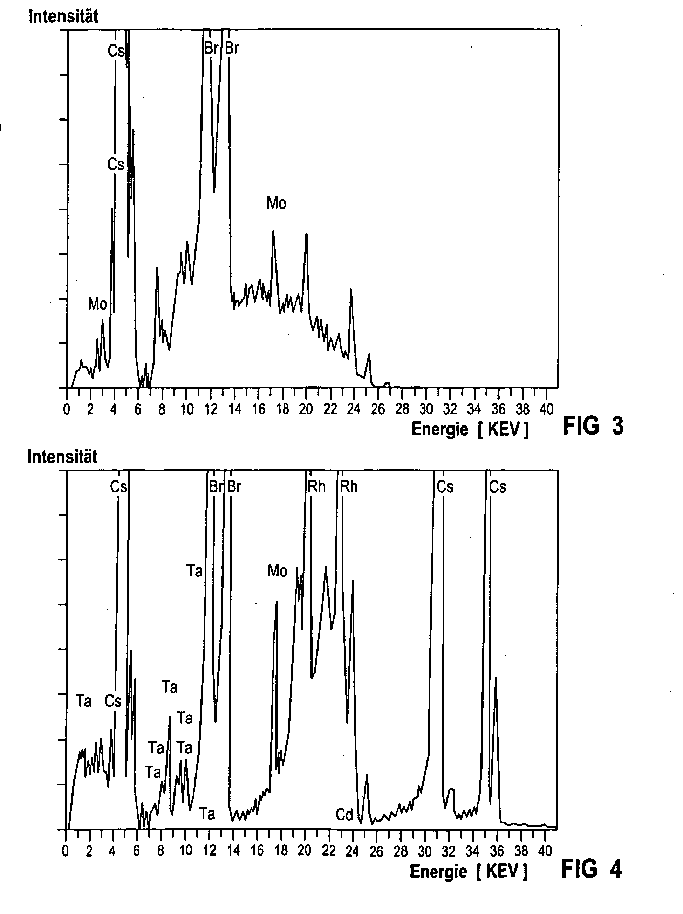

190 g CsBr-Pulver mit 5% EuBr₂-Dotierung werden in einem Verdampferschiffchen aus Molybdän auf 690°C erhitzt. Über dem Verdampferschiffchen ist ein Leitblech aus Tantal angebracht, welches ebenfalls auf 690°C erhitzt wird. Nach vollständiger Verdampfung des Leuchtstoffs weisen die auf dem Substrat 1 abgeschiedenen Kristalle eine dunkelgrüne Färbung auf. Die Färbung ist auf MoBr₂ und TaBr₅ zurückzuführen. Fig. 3 zeigt eine Röntgenfluoreszenzanalyse einer solchermaßen hergestellten Leuchtstoffschicht.

155g CsBr-Pulver mit 0,7% EuCl₂-Dotierung werden in einem Verdampferschiffchen aus Molybdän auf 680°C erhitzt. Über dem Verdampferschiffchen ist ein Leitblech aus Tantal angebracht, welches ebenfalls auf 680°C aufgeheizt wird. Nach vollständiger Verdampfung des Leuchtstoffs weisen die Kristalle eine gelbe Färbung auf.

170g CsBr-Pulver mit 3,8% EuCl₂-Dotierung werden in einem Verdampferschiffchen aus Molybdän auf etwa 700°C erhitzt. Über dem Verdampferschiffchen ist ein Leitblech aus Tantal angebracht, welches ebenfalls auf etwa 700°C erhitzt wird. Nach vollständiger Verdampfung des Leuchtstoffs weisen die Kristalle eine bräunliche Färbung auf.

170g CsBr-Pulver mit 5,5% EuCl₂-Dotierung werden in einem Verdampferschiffchen aus Molybdän auf etwa 700°C erhitzt. Über dem Verdampferschiffchen ist ein Leitblech aus Tantal angebracht, welches ebenfalls auf etwa 700°C erhitzt wird. Nach vollständiger Verdampfung des Leuchtstoffs weisen die Kristalle ein braune Färbung auf. Die aus Fig. 4 ersichtliche Röntgenfluoreszenzanalyse einer solchermaßen hergestellten Leuchtstoffschicht lässt erkennen, dass darin Mo und Ta enthalten sind, welche für die Färbung verantwortlich gemacht werden.

Eine Menge von 100 bis 1000g CsBr-Pulver mit 0,1 bis 10% EuCl₂ werden in einem aus Aluminiumoxid oder Kohlenstoff hergestellten Tiegel zusammen mit 0,1 bis 100g Eisen- oder Manganpulver auf 650 bis 850°C erhitzt. Nach vollständiger Verdampfung des Leuchtstoffs weisen die Kristalle eine rote Färbung auf. Die hergestellte Leuchtstoffschicht wird anschließend bei einer Temperatur von 100 bis 300°C für mehrere Stunden getempert.

100 bis 1000g CsBr-Pulver mit 0,1 bis 10% EuBr₂ werden in einem aus Aluminiumoxid oder Kohlenstoff hergestellten inerten Tiegel zusammen mit 0,1 bis 100g Zirkon- oder Titan-Pulver erhitzt. Nach vollständiger Verdampfung des Leuchtstoffs weisen die Kristalle eine blaue Färbung auf. Die hergestellte Leuchtstoffschicht wird anschließend bei 100 bis 300°C für mehrere Stunden getempert.

100 bis 1000g CsBr-Pulver mit 0,1 bis 10% EuCl₂ werden in einem aus Kobalt hergestellten Verdampferschiffchen auf 650 bis 800°C erhitzt. Nach vollständiger Verdampfung des Leuchtstoffs weisen die Kristalle eine blaue Färbung auf. Die hergestellte Leuchtstoffschicht wird anschließend bei 100 bis 300°C für mehrere Stunden getempert.

## Patentansprüche

1. Strahlungswandler, wobei auf einem Substrat (1) eine aus nadelförmigen Kristallen (3) gebildete Leuchtstoffschicht aufgebracht ist, **dadurch gekennzeichnet, dass** in den Kristallen ein Farbstoff (4) aufgenommen ist, wobei der Farbstoff (4) ein Halogenid ist.

2. Strahlungswandler nach Anspruch 1, wobei der Farbstoff (4) im Bereich der Kristallgrenzen angereichert ist.

3. Strahlungswandler nach einem der vorhergehenden Ansprüche, wobei der Farbstoff (4) eines der folgenden Metalle enthält: Ti, Co, Zr, V, Mn, Fe, Mo, Ta, Nb, Pd, In, Sn, Pt, W.

4. Strahlungswandler nach einem der vorhergehenden Ansprüche, wobei das Halogenid aus der folgenden Gruppe ausgewählt ist: TiBr₃, CoCl₂, ZrBr₃, ZrI₂, TiI₄, VCL₄, InI, PdBr₂, PtCl₄, MoCl₄, TaI₅, WCl₄, WBr₅, MoBr₃, TaBr₅, TaCl₅, WI₄, TiI₄, PdCl₂, FeCl₃, MnI₂, MoCl₃, NbBr₅, MoBr₂, SnI₄ , MnCl₂, MnBr₂,

5. Strahlungswandler nach einem der vorhergehenden Ansprüche, wobei der Leuchtstoff ein aus der folgenden Gruppe ausgewähltes Alkalihalogenid ist: RbCl, RbI, RbBr, CsCl, CsI, CsBr.

6. Strahlungswandler nach einem der vorhergehenden Ansprüche, wobei das Substrat (1) aus Glas, Aluminium oder Edelstahl hergestellt ist.

7. Verfahren zur Herstellung eines Strahlungswandlers nach einem der vorhergehenden Ansprüche, wobei in einer Aufdampfanlage ein Leuchtstoff verdampft und in Form nadelförmiger Kristalle (3) auf einem Substrat (1) abgeschieden wird, **dadurch gekennzeichnet, dass** während des Verdampfens des Leuchtstoffs ein Farbstoff (4) und/oder ein mit einem Metall zu einem Farbstoff (4) reagierender Stoff verdampft wird/werden, wobei der Farbstoff (4) ein Halogenid ist.

8. Verfahren nach Anspruch 7, wobei der Farbstoff (4) eines der folgenden Metalle enthält: Ti, Co, Zr, V, Mn, Fe, Mo, Ta, Nb, Pd, In Sn, Pt, W.

9. Verfahren nach Anspruch 7 oder 8, wobei das Halogenid aus der folgenden Gruppe ausgewählt ist: TiBr₃, CoCl₂, ZrBr₃, ZrI₂, TiI₄, Vcl₄, InI, PdBr₂, PtCl₄, MoCl₄, TaI₅, WCl₄ WBr₅, MoBr₃, TaBr₅, TaCl₅, WI₄, TiI₄, PdCl₂, FeCl₃, MnI₂, MoCl₃, NbBr₅, MoBr₂, SnI₄, MnCl₂, MnBr₂.

10. Verfahren nach einem der Ansprüche 7 bis 9, wobei der Leuchtstoff ein aus der folgenden Gruppe ausgewähltes Alkalihalogenid ist: RbCl, RbI, RbBr, CsCl, CsI, CsBr.

11. Verfahren nach einem der Ansprüche 7 bis 10, wobei ein aus dem Leuchtstoff und dem Farbstoff (4) hergestelltes Gemisch aus einer gemeinsamen Verdampfungsquelle (7) verdampft wird.

12. Verfahren nach einem der Ansprüche 7 bis 11, wobei ein aus dem Leuchtstoff, dem Metall und dem Stoff hergestelltes weiteres Gemisch verdampft wird.

13. Verfahren nach einem der Ansprüche 7 bis 12, wobei der Stoff aus der folgenden Gruppe ausgewählt ist: NaCl, NaI, NaBr, SmBr₂, EuBr₂, TlI, GaBr₃ , EuCl₂.

14. Verfahren nach einem der Ansprüche 7 bis 13, wobei das Metall aus der folgenden Gruppe ausgewählt ist: Ti, Co, Zr, V, Mn, Fe, Mo, Ta, Nb, Pd, In, Sn, Pt, W.

15. Verfahren nach einem der Ansprüche 7 bis 14, wobei ein den Leuchtstoff und den Stoff enthaltender Dampf über eine aus dem Metall (11) hergestellte Oberfläche geleitet und anschließend auf dem Substrat (1) abgeschieden wird.

16. Verfahren nach einem der Ansprüche 7 bis 15, wobei der Farbstoff (4) und der Leuchtstoff aus separaten Verdampfungsquellen verdampft werden.

17. Verfahren nach einem der Ansprüche 7 bis 16, wobei die Leuchtstoffschicht bei einer Temperatur im Bereich von 100 bis 300°C getempert wird.

## Claims

1. Radiation converter, wherein a luminophore layer formed from needle-shaped crystals (3) is applied to a substrate (1) **characterised in that** a colorant (4) is absorbed in the crystals, wherein the colorant (4) is a halogenide.

2. Radiation converter according to claim 1, wherein the colorant (4) is concentrated in the region of the crystal edges.

3. Radiation converter according to one of the preceding claims, wherein the colorant (4) contains one of the following metals: Ti, Co, Zr, V, Mn, Fe, Mo, Ta, Nb, Pd, In, Sn, Pt, W.

4. Radiation converter according to one of the preceding claims, wherein the halogenide is selected from the following groups: TiBr₃, CoCl₂, ZrBr₃, ZrI₂, TiI₄, Vcl₄, InI, PdBr₂, PtCl₄, MoCl₄, TaI₅, WCl₄, WBr₅, MoBr₃ , TaBr₅, TaCl₅, WI₄, TiI₄, PdCl₂, FeCl₃ , MnI₂, MoCl₃ , NbBr₅, MoBr₂, SnI₄, MnCl₂, MnBr₂.

5. Radiation converter according to one of the preceding claims, wherein the luminophore is an alkali halogenide selected from the following groups: RbCl, RbI, RbBr, CsCl, CsI, CsBr.

6. Radiation converter according to one of the preceding claims, wherein the substrate (1) is produced from glass, aluminium, or stainless steel.

7. Method to produce a radiation converter according to one of the preceding claims, wherein a luminophore is vaporised in a vapour deposition system and precipitated onto a substrate (1) in the form of needle-shaped crystals (3), **characterised in that** a colorant (4) and/or substance reacting with a metal to create a colorant (4) is/are vaporised during the vaporisation of the luminophore, wherein the colorant (4) is a halogenide.

8. Method according to claim 7, wherein the colorant (4) contains one of the following metals: Ti, Co, Zr, V, Mn, Fe, Mo, Ta, Nb, Pd, In Sn, Pt, W.

9. Method according to claim 7 or 8, wherein the halogenide is selected from the following groups: : TiBr₃ , CoCl₂, ZrBr₃ , ZrI₂, TiI₄, Vcl₄, InI, PdBr₂, PtCl₄, MoCl₄, TaI₅, WCl₄, WBr₅, MoBr₃, TaBr₅, TaCl₅, WI₄, TiI₄, PdCl₂, FeCl₃, MnI₂, MoCl₃, NbBr₅, MoBr₂, SnI₄, MnCl₂, MnBr₂.

10. Method according to one of claims 7 to 9, wherein the luminiophore is a alkali halogenide selected from the following groups: RbCl, RbI, RbBr, CsCl, CsI, CsBr.

11. Method according to one of claims 7 to 10, wherein a mixture produced from the luminophore and the colorant (4) is vaporised from a common vaporisation source (7).

12. Method according to one of claims 7 to 11, wherein a further mixture produced from the luminophore, the metal and the substance is vaporised.

13. Method according to one of claims 7 to 12, wherein the substance is selected from the following groups: NaCl, NaI, NaBr, SmBr₂, EuBr₂, TlI, GaBr₃, EuCl₂.

14. Method according to one of claims 7 to 13, wherein the metal is selected from the following group: Ti, Co, Zr, V, Mn, Fe, Mo, Ta, Nb, Pd, In, Sn, Pt, W.

15. Method according to one of claims 7 to 14, wherein a vapour containing the luminophore and the substance is directed over a surface made of the metal (11) and is finally precipitated onto the substrate (11).

16. Method according to one of claims 7 to 15, wherein the colorant (4) and the luminophore are vaporised from separate vaporisation sources.

17. Method according to one of claims 7 to 16, wherein the luminophore layer is tempered at a temperature in the range of 100 to 300°C.

## Revendications

1. Convertisseur de rayonnement, dans lequel on dépose sur un substrat ( 1 ) une couche de substance luminescente constituée de cristaux ( 3 ) en forme d'aiguille, **caractérisé en ce qu'**un colorant ( 4 ) est absorbé dans les cristaux, le colorant ( 4 ) étant un halogénure.

2. Convertisseur de rayonnement suivant la revendication 1, dans lequel la zone des limites de cristaux est enrichie en le colorant ( 4 ).

3. Convertisseur de rayonnement suivant l'une des revendications précédentes, dans lequel le colorant contient l'un des métaux suivants : Ti, Co, Zr, V, Mn, Fe, Mo, Ta, Nb, Pd, In, Sn, Pt, W.

4. Convertisseur de rayonnement suivant l'une des revendications précédentes, dans lequel l'halogénure est choisi dans le groupe suivant : TiBr₃, CoCl₂, ZrBr₃, ZrI₂, TiI₄, VCl₄, InI, PdBr₂, PtCl₄, MoCl₄, TaI₅, WCl₄, WBr₅, MoBr₃, TaBr₅, TaCl₅, WI₄, TiI₄, PdCl₂, FeCl₃, MnI₂, MoCl₃, NbBr₅, MoBr₂, SnI₄, MnCl₂, MnBr₂.

5. Convertisseur de rayonnement suivant l'une des revendications précédentes, dans lequel la substance luminescente est un halogénure de métal alcalin choisi dans le groupe suivant : RbCl, RbI, RbBr, CsCl, CsI, CsBr.

6. Convertisseur de rayonnement suivant l'une des revendications précédentes, dans lequel le substrat ( 1 ) est en verre, en aluminium ou en acier fin.

7. Procédé de fabrication d'un convertisseur de rayonnement suivant l'une des revendications précédentes, dans lequel on évapore une substance luminescente dans une installation d'évaporation et on la dépose sous forme de cristaux ( 3 ) en forme d'aiguille sur un substrat ( 1 ), **caractérisé en ce que**, pendant l'évaporation de la substance luminescente, on évapore un colorant ( 4 ) et/ou une substance réagissant sur un métal pour donner un colorant ( 4 ), le colorant ( 4 ) étant un halogénure.

8. Procédé suivant la revendication 7, dans lequel le colorant contient l'un des métaux suivants : Ti, Co, Zr, V, Mn, Fe, Mo, Ta, Nb, Pd, In, Sn, Pt, W.

9. Procédé suivant la revendication 7 ou 8, dans lequel l'halogénure est choisi dans le groupe suivant : TiBr₃, CoCl₂, ZrBr₃, ZrI₂, TiI₄, VCl₄, InI, PdBr₂, PtCl₄, MoCl₄, TaI₅, WCl₄, WBr₅, MoBr₃, TaBr₅, TaCl₅, WI₄, TiI₄, PdCl₂, FeCl₃, MnI₂, MoCl₃, NbBr₅, MoBr₂, SnI₄, MnCl₂, MnBr₂.

10. Procédé suivant l'une des revendications 7 à 9, dans lequel la substance luminescente est un halogénure de métal alcalin choisi dans le groupe suivant : RbCl, RbI, RbBr, CsCl, CsI, CsBr.

11. Procédé suivant l'une des revendications 7 à 10, dans lequel on évapore d'une source ( 7 ) d'évaporation commune un mélange fabriqué à partir de la substance luminescente et du colorant ( 4 ).

12. Procédé suivant l'une des revendications 7 à 11, dans lequel on évapore un autre mélange fabriqué à partir de la substance luminescente, du métal et de la substance.

13. Procédé suivant l'une des revendications 7 à 12, dans lequel la substance est choisie dans le groupe suivant : NaCl, NaI, NaBr, SmBr₂, EuBr₂, TlI, GaBr₃, EuCl₂.

14. Procédé suivant l'une des revendications 7 à 13, dans lequel le métal est choisi dans le groupe suivant : Ti, Co, Zr, V, Mn, Fe, Mo, Ta, Nb, Pd, In, Sn, Pt, W.

15. Procédé suivant l'une des revendications 7 à 14, dans lequel on envoi une vapeur contenant la substance luminescente et la substance sur une surface en le métal ( 11 ) et on la dépose sur le substrat ( 1 ).

16. Procédé suivant l'une des revendications 7 à 15, dans lequel on évapore le colorant ( 4 ) et la substance luminescente provenant de sources d'évaporation distinctes.

17. Procédé suivant l'une des revendications 7 à 16, dans lequel on met la couche de substance luminescente en température à une température de l'ordre de 100 à 300°C.
